# EUROPEAN PATENT SPECIFICATION

(11) **EP 2 690 259 B1**
(45) Date of publication and mention of the grant of the patent: **04.12.2019**
(21) Application number: 12761470.9
(22) Date of filing: 22.03.2012
(51) Int. Cl.: F01D 5/06, B23K 9/02, B23K 9/23

(54) **WELDED TURBINE ROTOR AND METHOD FOR PRODUCING THE TURBINE ROTOR**
GESCHWEISSTER TURBINENROTOR UND VERFAHREN ZUR HERSTELLUNG DES TURBINENROTORS
ROTOR DE TURBINE SOUDÉ ET PROCÉDÉ DE PRODUCTION DU ROTOR DE TURBINE

(30) Priority: 23.03.2011 JP 2011064657
(43) Date of publication of application: 29.01.2014
(73) Proprietor: Mitsubishi Hitachi Power Systems, Ltd., Yokohama-shi, Kanagawa 220-8401 (JP)
(72) Inventor: KAWASAKI Kenji, Tokyo 108-8215 (JP); YAMAMOTO Ryuichi, Tokyo 108-8215 (JP); NAKAMURA Ikuo, Tokyo 108-8215 (JP); NISHIMOTO Shin, Tokyo 108-8215 (JP); KAWAGUCHI Seiichi, Kakogawa-shi Hyogo 675-0031 (JP); SHIGE Takashi, Hiroshima-shi Hiroshima 733-0036 (JP)
(74) Representative: Hoffmann Eitle
(86) International application number: PCT/JP2012/057303
(87) International publication number: WO 2012/128310

(56) References cited:
- EP-A1- 2 226 146
- EP-A1- 2 460 612
- EP-A2- 0 964 135
- WO-A1-2013/084777
- JP-A- 60 049 866
- JP-A- 2004 105 994
- JP-A- 2005 344 527
- JP-A- 2010 031 812
- US-A- 2 819 517
- US-A- 3 626 140
- US-A- 4 063 062

## Description

### Field of the Invention

The present invention is related to a turbine rotor formed by which two different members are joined by welding in an axial direction of the turbine rotor.

### DESCRIPTION OF THE RELATED ART

In a turbine rotor which configures a turbine such as a steam turbine or the like, depending on the location along an axial direction of the turbine rotor, the temperature of the steam passing therethrough is different. Thus, a dissimilar-metal-welding rotor joined a plurality of different members together by contacting and welding each other in axial direction has conventionally used as the turbine rotor.

As the method to weld the two members in this dissimilar-metal-welding rotor, there is a method in which front surfaces of the two members contacting each other at the tips thereof are welded so as to not penetrate to the back surfaces thereof (for example, JP 2010-31812). However, in the welding of one surface as above, there is a possibility that a crack develops from seams of the two members in the weld portion remaining on the back surface. Therefore, it is necessary to perform full penetration welding that the two contacting members are welded from the front surfaces to the back surfaces thereof so as to penetrate therethrough to avoid problems as such described above.

In TIG welding generally used for producing the dissimilar-metal-welding rotor, an oxidizing of the front surface of the member at the side close to a welding torch is prevented by the inert gas introduced from the welding torch. However, in a case of performing the full penetration welding, it is necessary to prevent the oxidizing of a penetration bead formed at the back side of the two members.

In the general full penetration welding not limited in the turbine rotor, the method conventionally used to prevent the oxidizing of the penetration bead includes introducing inert gas in the back side of the members or forming a space so as to enclose penetration bead at the back side of the members and filling inert gas inside the space (for example, JP H8-206830).

In a case of the turbine rotor, a cavity portion is formed at the back side of the welding portion inside the turbine rotor, and inert gas is filled inside the cavity portion in advance. For a method to introduce the inert gas inside the cavity portion, an inspecting hole formed so as to connect from the front surface of the members to the cavity portion is used. The inspection hole is used for inspecting the welding condition on the back side of the members by inserting the fiberscope or the like, therein during the welding operation or after completing the welding operation. In addition, inert gas is introduced inside the cavity portion through the inspecting hole.

EP 2 460 612 A1 discloses a method for manufacturing a rotor by welding a plurality of elements together. The elements have a body with cavities and surfaces to be welded to surfaces of adjacent elements. According to the method, the elements are vertically stacked one above the other to form a pile with facing surfaces to be welded together defining slots. The cavities of adjacent elements define bores that extend within the pile. Adjacent elements are welded together within the slots. The bore is purged with an inert gas or mixture during welding.

WO 2013/084777 A1 discloses a back-shielded welding method and a welded structure using this method. The back-shielded welding method forms notches in the abutting edges of two weld metal surfaces that are to be brought into contact so as to form, between the two weld metal surfaces, a slit-shaped gas supply opening which allows the front side and the back side of the weld metal surfaces to communicate and which extends in the direction that the weld bead is to be formed. Then, the method forms the gas supply opening using the notches by abutting and temporarily fixing the abutting edges of the weld metal surfaces to each other. Subsequently, a weld bead is formed while supplying an inert gas from the gas supply opening and the gas supply opening is closed using the weld bead.

US 2,819,517 discloses a method of welding pipe ends together. The method comprises the steps of tapering the ends of the pipes to provide a peripheral groove with the bottom thereof spaced from the internal walls of the pipes when the pipes are in abutting relationship, sealing a combustible imperforate baffle in each pipe at a point spaced from the end thereof, securing the pipes in the abutting relationship and in alignment one with the other, forming an opening through the meeting edges of the pipes, introducing an inert gas through the opening to fill the chamber defined by the baffles and the intervening portions of the pipes, welding the pipes while retaining the inert gas within the chamber during at least part of the welding operation and then heating the weld part to stress relieve the joint and burn the combustible baffles.

US 3,626,140 discloses a method of welding together two elements with an electron bombardment beam. The method comprises the steps of preparing each of the two parts to be welded with a supporting toe and a chamfer, the assembly of the chamfers of the two parts, when the supporting toes are in contact with each other, having a ratio of the depth to the width at least equal to 10, the width not exceeding 5 mm, effecting, by means of the beam of an electron gun, the welding of the surfaces of the supporting toes in order to assemble the parts in contact along the supporting toes, progressively filling the chamfer with a metal filler and welding the metal filler to the surfaces of the chamfer.

EP 2 226 146 A1 discloses a method of joining two metallic work pieces by tungsten inert gas welding and an apparatus for carrying out this method.

### BRIEF SUMMARY OF THE INVENTION

### Problems to be Solved in the invention

In the conventional turbine rotor, there is a possibility that stress concentration occurs in a surrounding area of the inspection hole formed inside the turbine rotor, and thus, it is not preferable in terms of the strength design. Therefore, a turbine rotor and the method of producing the same in which inert gas is filled in the cavity portion without forming the inspection hole are necessary to be developed.

The invention is made in view of such circumstances, and the object of the present invention is to provide a method of filling inert gas inside the turbine rotor without quality loss of the turbine rotor after welding in the turbine rotor that the two different members are in contact with each other and welded at the tips of the two different members in the axial direction of the turbine rotor.

### Means for solving the problems

The turbine rotor of the present invention has the features of claim 1.

In the turbine rotor of the present invention, inert gas is introduced into the cavity inside the turbine rotor through the gas-introducing hole to prevent oxidizing of penetration bead occurring on the members when welding the first and second members. According to the present invention, after welding the first and second members, since weld metal is filled at the gas-introducing hole, stress concentration is less likely to occur in a surrounding area of the gas-introducing hole which was existed before welding. Therefore, it is possible to prevent a reduction in strength of the turbine rotor.

In the turbine rotor related to the present invention, the material of the first member is different with that of the second member, and the border between the first and the second members in the groove portion may be close to either one of the first and second members.

In the turbine rotor of the present invention, since the border between the first and second members in the groove portion is positioned so as to be close to at least one of the two members, the gas-introducing hole can be formed at a position away from the border of the bottom of the groove portion. As described above, it is possible to form the gas-introducing hole at the desirable position by forming the gas-introducing hole at the position away from the border without reducing a positional accuracy of the hole caused by slipping a drill, which drills a hole, at the border. In addition, it is possible to drill the gas-introducing hole exactly at a predetermined drilling position, since the positional accuracy of forming the hole becomes high. Thereby, the gas-introducing hole is reliably covered during welding of the first member and the second member.

In the turbine rotor related to the present invention, the material of the first member is different from that of the second member, and the border between the first and the second members is close to the member higher in hardness of either one of the first and second members.

According to this configuration, the drill is prevented from slipping toward the low-hardness member by bouncing off from the high-hardness member and it is possible to form a hole by penetrating only the low-hardness member.

In the turbine rotor related to an embodiment of the present invention, each of connecting surfaces of the first and the second members may be formed in a shape fitted into each other.

According to this configuration, the position of the two members in a state of fitting into each other at the connecting surface is fixed. Thereby, it is possible to drill the gas-introducing hole exactly at a predetermined drilling position, since it is possible to perform a drilling operation and a welding operation with a high accuracy. In addition, it is possible to cover the gas-introducing hole during the welding operation by melting the gas-introducing hole.

The production method of a turbine rotor of the present invention has the features of claim 4.

According to another production method which does not form part of the invention, the heat of the welding operation from the lateral direction goes upward when the two members, which are the first member and the second member, are abutted and welded each other from up and down. Thereby, the member disposed on the upper side (upper member) is heated more strongly than the member disposed on the lower side (lower member). However, the thermal conductivity of the upper member is higher than the lower member, and thus, the upper member radiates more heat than the lower member. Therefore, a large temperature difference does not occur between the upper member and the lower member, and the entire gas-introducing hole can be covered in the welding operation.

### Effect of the Invention

According to the present invention, it is possible to fill inert gas inside the turbine rotor without quality loss of the turbine rotor after welding in the turbine rotor that the two different members are in contact with each other and welded in the axial direction of a turbine rotor.

### BRIEF DESCRIPTION OF THE DRAWINGS

FIG. 1 shows an overall schematic view of a steam turbine which is provided a turbine rotor related to a first embodiment of the present invention.
FIG. 2 shows a schematic side view of part of the turbine rotor related to the first embodiment of the present invention.
FIG. 3 shows a schematic sectional view of a surrounding area of a groove portion in the turbine rotor related to the first embodiment of the present invention.
FIG. 4 shows a schematic sectional view of a surrounding area of a groove portion in the turbine rotor related to a second embodiment of the present invention.
FIG. 5 shows a schematic sectional view of a surrounding area of a groove portion in the turbine rotor related to a third embodiment not forming part of the present invention.
FIG. 6 shows a view for explaining the problems when a border of the two members is positioned at the center position of the groove portion.

### BEST MODE TO CARRYING OUT THE INVENTION

### (First embodiment)

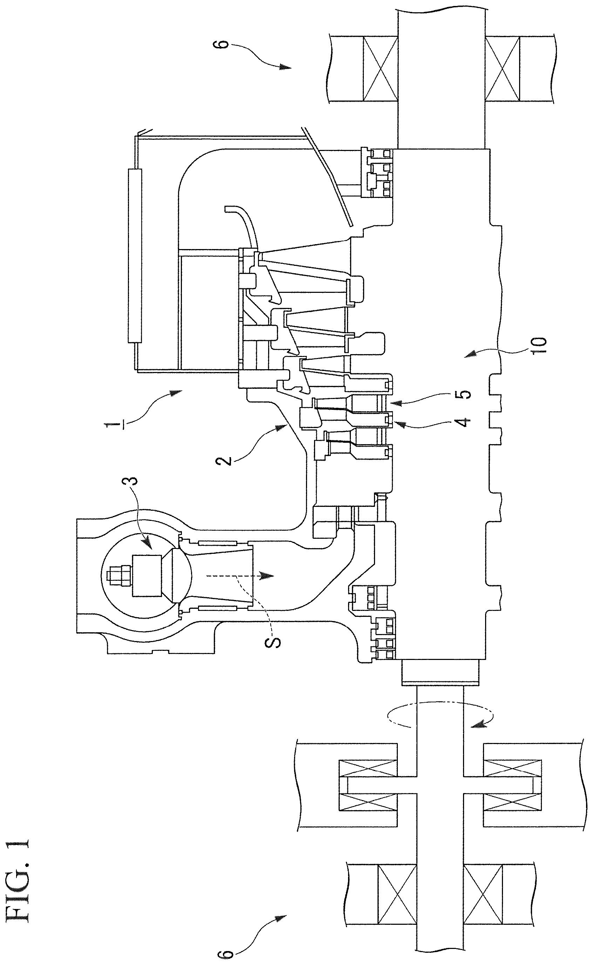

Embodiments of the present invention will be explained below with reference to the figures. First, the structure of turbine rotor related to the first embodiment of the present invention will be explained. FIG. 1 shows an overall schematic view of a steam turbine 1 provided a turbine rotor 10 related to the first embodiment. The steam turbine 1 is provided with a casing 2, a control valve 3, a turbine rotor 10, a plurality of vanes 4, a plurality of blades 5, and a bearing 6. The control valve 3 controls a flow rate and pressure of steam S flowing into the casing 2. The turbine rotor 10 is provided rotatably inside the casing 2 and transfers its rotation power to the machine such as a generator or the like, which is not shown herein. The vanes 4 are provided on the inner circumferential surface of the casing 2. The blades 5 are provided on the outer circumferential surface of the turbine rotor 10. The bearing 6 supports the turbine rotor 10 so as to be rotatable around its axis of rotation.

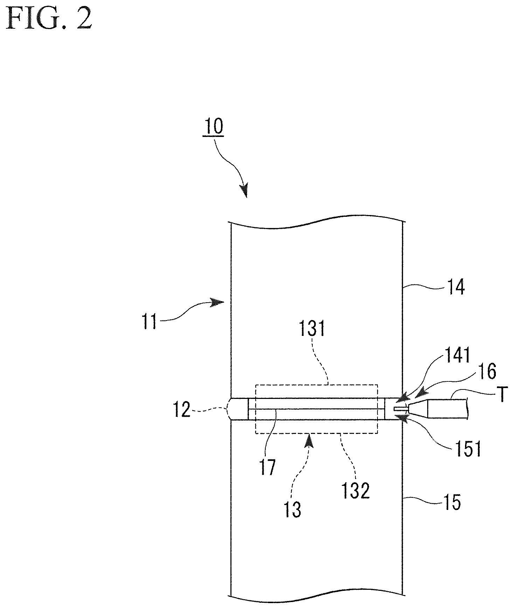

FIG. 2 shows a schematic side view of part of the turbine rotor 10. The turbine rotor 10 is provided with a rotor body 11, a welding portion 12, and a cavity portion 13. The rotor body 11 extends in an axial direction of the turbine rotor 10. The welding portion 12 is provided at a certain position in the axial direction of rotor body 11. The cavity portion 13 is formed inside the rotor body 11.

As shown in FIG. 2 the rotor body 11 has a high-hardness member (first member) 14 and a low-hardness member (second member) 15. The high-hardness member 14 has a cylindrical shape and extends in the axial direction. The low-hardness member 15 has a cylindrical shape same as the high-hardness member 14 and extends in the axial direction.

The high-hardness member 14 is relatively higher in hardness than that of the low-hardness member 15. As shown in FIG. 2, a first recessed portion 141 is formed in the high-hardness member 14 by which one edge of the edge portion of the high-hardness member 14 in the longitudinal direction is cut in radial direction.

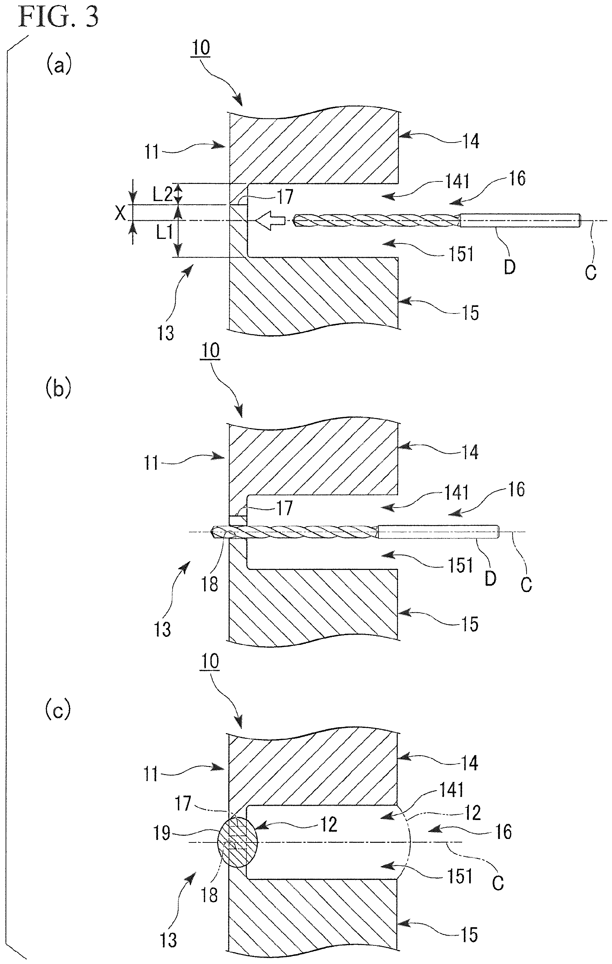

The low-hardness member 15 is relatively lower in hardness than that of the high-hardness member 14. As shown in FIG. 2, a second recessed portion 151 is formed in the low-hardness member 15 by which one edge of the edge portion of the low-hardness member 15 in the longitudinal direction is cut in the radial direction. In addition, as shown in FIG. 2 and 3, an outer diameter of the second recessed portion 151 has substantially the same outer diameter with the first recessed portion 141 of the high-hardness member 14, and a length L1 of the second recessed portion 151 in the axial direction is formed longer than the length L2 of the first recessed portion 141 in the axial direction.

Here, as a combination of the high-hardness member 14 and the low-hardness member 15, for example, 9% chrome steel (a steel containing 9% chrome; same description method is applied hereafter) may be used as the high-hardness member 14, while 2.25% chrome steel or 3.5% nickel steel is used as the low-hardness member 15. In addition, 12% chrome steel maybe used as the high-hardness member 14, while 2.25% chrome steel or 3.5% nickel steel is used as the low-hardness member 15. Moreover, a nickel-based superalloy may be used as the high-hardness member 14, while 2.25% chrome steel, 9% chrome steel or 12% chrome steel is used as the low-hardness member 15. Furthermore, stainless steel may be used as the high-hardness member 14, while 2.25% chrome steel, 9% chrome steel or 12% chrome steel is used as the low-hardness member 15. The combination of the high-hardness member 14 and the low-hardness member 15 is not limited as described above, and any combination can be adopted if the hardness of the members is different.

As shown in FIG. 2, the first recessed portion 141 of the high-hardness member 14 is combined with the second recessed portion 151 of the low-hardness member 15 and the groove portion 16 is formed. FIG. 3 shows a schematic sectional view of the surrounding area of the groove portion 16. As shown in FIG. 3(a), a border 17 between the high-hardness member 14 and the low-hardness member 15 is positioned approaching a certain distance X toward the high-hardness member 14 side from a center position C (a chain line shown in FIG. 3) toward a groove width direction of the groove portion 16.

A welding portion 12 connects the high-hardness member 14 and the low-hardness member 15. As shown in FIG. 2, in the groove portion 16 formed by combining the first recessed portion 141 and the second recessed portion 151, the welding portion 12 is formed by welding the high-hardness member 14 and the low-hardness member 15 by using a welding torch T.

A cavity portion 13 is a space for filling inert gas which prevents oxidizing of a penetration bead 19 at a welding operation. The cavity portion 13 is formed by combining a first concave portion 131 formed in the high-hardness member 14 and a second concave portion 132 formed in the low-hardness member 15, as shown in FIG. 2 with the dashed line.

Next, a production method of the turbine rotor 10 related to the first embodiment is explained. First, the worker makes a state in which the high-hardness member 14 and the low-hardness member 15 are in contact. That is, as shown in FIG. 3(a), the worker makes a state in which one end portion of the high-hardness member 14 and one end portion of the low-hardness member 15 are in contact so as to face the first recessed portion 141 and the second recessed portion 151. Accordingly, the groove portion 16 is formed by the first recessed portion 141 and the second recessed portion 151. In addition, as described above, a length L1 of the second recessed portion 151 in the axial direction is formed longer than a length L2 of the first recessed portion 141 in the axial direction. Thus, the border 17 between the high-hardness member 14 and the low-hardness member 15 is positioned so as to approach to the high-hardness member 14 side from the center position C in the groove width direction of the groove portion 16.

Next, the worker forms a gas-introducing hole 18 on the bottom portion of the groove portion 16. That is, a drill D is set at the center position C toward the groove width direction of the groove portion 16, as shown in FIG. 3(a), and penetrates the bottom portion of the groove portion 16, as shown in FIG. 3(b). At that time, the border 17 between the high-hardness member 14 and the low-hardness member 15 is positioned so as to approach to the high-hardness member 14 side from the center position C of the groove portion 16. Thus, the drill D passes the position avoided from the position of the border 17, and the gas-introducing hole 18 is formed by penetrating the low-hardness member 15.

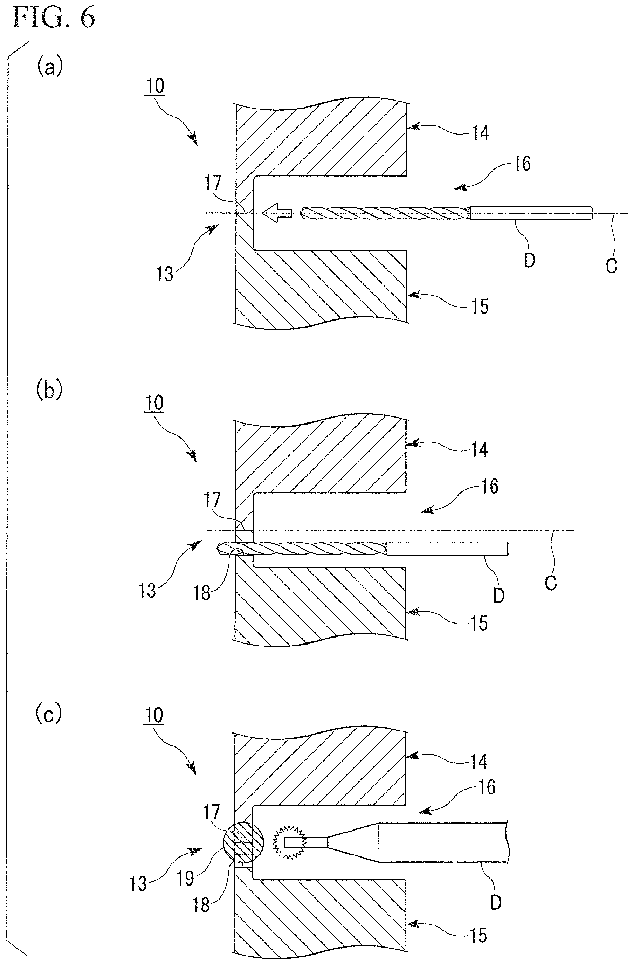

Since the drill D passes the position avoided from the position of the border 17, the problem in which the gas-introducing hole 18 is formed at the position different from the original drilling position where should be drilled can be prevented in advance. Here, FIG. 6 is the drawing explaining the problem in a case where the border 17 is positioned at the center position C of the groove portion 16. In a case where the border 17 between the two members 14 and 15 is positioned at the center position C of the groove portion 16, as shown in FIG. 6(a), if the drill D tries to open a hole at the border 17, the drill D slips due to the border 17. Thus, as shown in FIG. 6(b), the gas-introducing hole 18 may be formed at the position different from the original drilling position where should be drilled. In this case, as shown in FIG. 6(c), even though the welding operation of the two members 14 and 15 is performed, part of the gas-introducing hole 18 remains in an open state without being covered. If part of the gas-introducing hole 18 remains in an open state, the problems will occur such that the uranami bead 19 is oxidized at the welding operation and the strength of the welding portion becomes insufficient due to leaking of inert gas inside the cavity portion 13 to the outside from the gas-introducing hole 18. Especially, in a case where the groove width of the groove portion 16 is narrow, the drilling position of the gas-introducing hole 18 and the border 17 between the two members 14 and 15 are easy to match, thereby this problem tends to occur.

In addition, such problems become obvious, especially in a case where the hardness of the two members joined together by welding is different. Because, when a tip of the drill D inserted into the groove portion 16 for opening the gas-introducing hole 18 reaches to the border 17 between the two members 14 and 15, a tip of the drill D bounces off the high-hardness member 14 and slips toward the low-hardness member 15 side.

Next, the worker introduces inert gas into the cavity portion 13. That is, the worker fills inert gas such as argon gas into the cavity portion 13 formed inside the rotor body 11 via a tube, or the like (not shown), inserted into the gas-introducing hole 18.

Next, the worker performs welding of the high-hardness member 14 and the low-hardness member 15. That is, as shown in FIG. 2, the worker inserts the tip of the welding torch T into the groove portion 16 from the lateral direction, and performs welding, for example TIG welding, at the border 17 between the high-hardness member 14 and the low-hardness member 15. Accordingly, as shown in FIG. 3(c), the surrounding area of the border 17 is melted, the welding portion 12 is formed, and the high-hardness member 14 and the low-hardness member 15 are joined together by the welding portion 12. In addition, at that time, the gas-introducing hole 18 is covered by melting the surrounding area of the gas-introducing hole 18 close to the border 17. Part of the welding portion 12 formed at the outside of the rotor body 11 is prevented from oxidizing, because inert gas (not shown) is introduced from the welding torch T. On the other hand, the penetration bead 19 of the welding portion 12 formed inside the rotor body 11 is prevented from oxidizing at the part thereof because inert gas is filled in the cavity portion 13. In addition, for the sake of expediency of explanation, the welding portion 12 is shown only at the bottom part of the groove portion 16 in FIG. 3(c). However, as shown in two-dot chain line in FIG. 3(c), the welding portion 12 is formed up to the position at which the entire groove portion 16 is filled with weld material, at the end of the welding operation. Accordingly, producing of the turbine rotor 10 is completed.

### (Second Embodiment)

Next, the structure of turbine rotor 20 related to the second embodiment of the present invention will be explained. The turbine rotor 20 of the present embodiment is different with the turbine rotor 10 of the first embodiment only at the structure of the rotor body 21. The other structures and the production method are the same, therefore, the same reference numbers are used and the explanation thereof is omitted.

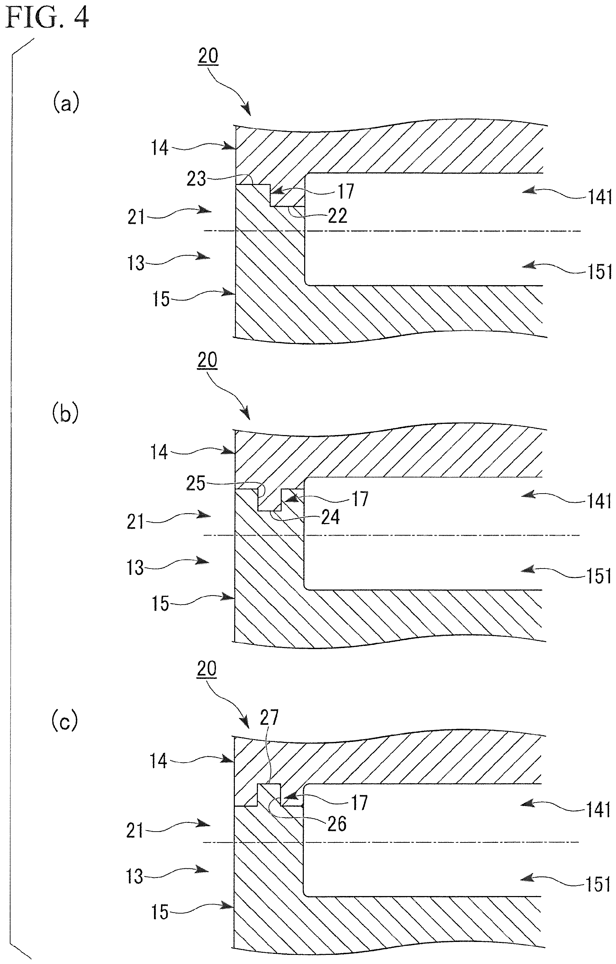

FIG. 4 shows a schematic sectional view of the surrounding area of the groove portion 16 in the turbine rotor 20 related to the second embodiment of the present invention. The rotor body 21 of the present embodiment is the same as the rotor body 21 of the first embodiment in a point of view of having the high-hardness member 14 and the low-hardness member 15. However, the shape of the connecting surface between the high-hardness member 14 and the low-hardness member 15 is different with that in the first embodiment. That is, as shown in FIG. 4(a), a step portion 22 having stepped shape is formed at one end portion of the high-hardness member 14. In addition, a step portion 23 having stepped shape is formed at one end portion of the low-hardness member 15. The step portion 22 of the high-hardness member 14 and the step portion 23 of the low-hardness member 15 are fitted into each other. According to this structure, as shown in FIG. 3(c), at the time of welding the high-hardness member 14 and the low-hardness member 15, both members 14 and 15 are fixed in a state of matching each of the axes thereof without moving in a radial direction each other at the position of the border 17. Thus, the surrounding area of the gas-introducing hole 18 can be reliably melted, and the gas-introducing hole 18 can be reliably covered. In addition, when the gas-introducing hole 18 is opened by the drill D at the bottom portion of the groove portion 16, both members 14 and 15 are fixed in a state of matching each of the axes thereof. Thus, the gas-introducing hole 18 can be accurately formed at the center position C of the groove portion 16.

FIG. 4(b) shows a modification of the second embodiment. In the present modification, a convex portion 24 is formed at one end portion of the high-hardness member 14, while a concave portion 25 having a shape fitted into the convex portion 24 of the high-hardness member 14 is formed at one end of the low-hardness member 15. The operation and effects thereof are the same as those of the fitting between the steps 22 and 23 shown in FIG. 4(a).

FIG. 4(c) shows another modification of the second embodiment. In the present modification, a concave portion 26 is formed at one end portion of the high-hardness member 14, while a convex portion 27 having a shape fitted into the concave portion 26 is formed at one end portion of the low-hardness member 15. The operation and effects thereof is the same as that of the fitting between the steps 22 and 23 shown in FIG. 4(a).

### (Third Embodiment)

Next, the structure of turbine rotor 30 related to the third embodiment, which does not form part of the present invention, will be explained. The turbine rotor 30 of the present embodiment is different from the turbine rotor 10 of the first embodiment only at the structure and production method of the rotor body 31. The other structures and production method are the same as the first embodiment, therefore, the same reference numbers of the first embodiment are used and the explanation of them is omitted.

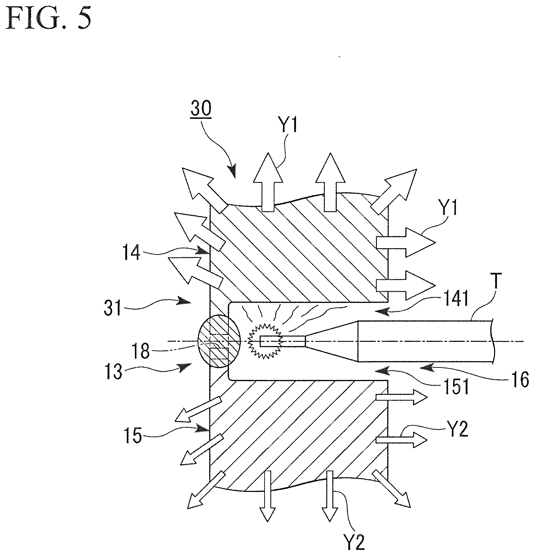

FIG. 5 shows a schematic sectional view of the surrounding area of the groove portion 16 in the turbine rotor 30 related to a third embodiment which does not form part of the present invention. The rotor body 31 of the present embodiment is the same as the rotor body 31 of the first embodiment in a point of view of having the high-hardness member 14 and the low-hardness member 15. However, thermal conductivity between the high-hardness member 14 and the low-hardness member 15 is different from that in the first embodiment. Specifically, thermal conductivity of the high-hardness member 14 is relatively higher than that in the first embodiment, and thermal conductivity of the low-hardness member 15 is relatively lower than that in the first embodiment.

In the production method of the turbine rotor 30 configured as according to the above, as shown in FIG. 5, the worker performs contacting of each of the tips of both members 14 and 15 so that the low-hardness member 15 having low thermal conductivity is disposed at the lower side, and the high-hardness member 14 having high thermal conductivity is disposed at the upper side. Then, the worker, as in the first embodiment, produces the turbine rotor 30 by performing the steps in the order of forming the gas-introducing hole 18 on the bottom portion of the groove portion 16, filling inert gas into the cavity portion 13, and welding between the high-hardness member 14 and the low-hardness member 15.

According to this production method, as shown in FIG. 5, heat occurring in the welding operation from the lateral direction rises, thereby, the high-hardness member 14 disposed at the upper side of the low-hardness member 15 is heated more than the low-hardness member 15 disposed at the lower side of the high-hardness member 14. However, the high-hardness member 14 has thermal conductivity higher than the low-hardness member 15 and radiates heat more than the low-hardness member 15 as shown in FIG. 5 with the arrows Y1 and Y2, thereby, temperature difference between the high-hardness member 14 and the low-hardness member 15 does not occur. Therefore, at the welding operation between the high-hardness member 14 and the low-hardness member 15, the high-hardness member 14 and the low-hardness member 15 can be melt evenly, and thus, the gas-introducing hole 18 can be reliably covered.

The present embodiment is performed with the members in which the high-hardness member 14 is relatively high in thermal conductivity and the low-hardness member 15 is relatively low in thermal conductivity. On the contrary, the present embodiment can be performed with the members in which the high-hardness member14 is relatively low in thermal conductivity and the low-hardness member 15 is relatively high in thermal conductivity. In this case, in producing the turbine rotor 30, the high-hardness member14 low in thermal conductivity is disposed at the lower side, and the low-hardness member 15 high in the thermal conductivity is disposed at the upper side. Therefore, aforementioned effect of the present embodiment can be obtained.

In addition, in each of the embodiments explained above, two members, which are the different hardness members to each other and configure the rotor body 11, 12, and 31, are took as an example of the structure in which the drill D tends to slip. However, the present invention is not limited to the above structures.

In addition, the shapes of each of the members, the combination thereof and operation steps thereof, or the like, shown in aforementioned embodiments are one of the example, and the present invention can be changed within a scope not departing from the subject-matter of the present invention as claimed in the claims according to design requirements or the like.

### Brief Description of the Reference Symbols

- 1: steam turbine
- 2: casing
- 3: control valve
- 4: vane
- 5: blade
- 6: bearing
- 10: turbine rotor
- 11: rotor body
- 12: welding portion
- 13: cavity portion
- 14: high-hardness member
- 15: low-hardness member
- 16: groove portion
- 17: border
- 18: gas-introducing hole
- 19: uranami bead
- 20: turbine rotor
- 21: rotor body
- 22: step portion
- 23: step portion
- 24: convex portion
- 25: concave portion
- 26: concave portion
- 27: convex portion
- 30: turbine rotor
- 31: rotor body
- 131: first concave portion
- 132: second concave portion
- 141: first recessed portion
- 151: second recessed portion
- C: center position
- D: drill
- L1: length (first recessed portion)
- L2: length (second recessed portion)
- S: Steam
- T: welding torch
- X: a certain distance
- Y1: Arrow
- Y2: Arrow

## Claims

1. A turbine rotor (10) comprises:
a first member (14) that has a cylindrical shape and extends in an axial direction of the turbine rotor, and
a second member (15) that has a cylindrical shape and extends in the axial direction of the turbine rotor, the second member being axially connected to the first member in a state in which one cylindrical end portion of the first member and one cylindrical end portion of the second member are in contact at a border (17),
wherein a groove portion (16) for welding is formed at the border (17) between the first and second members by combining a first recessed portion (141) formed by cutting one edge of an edge portion of the first member in the radial direction and a second recessed portion (151) formed by cutting one edge of an edge portion of the second member in the radial direction,
wherein a welding portion (12) is formed which connects the first member and the second member, the welding portion being formed by performing welding at the border between the first member (14) and the second member (15),
**characterized in that** a gas-introducing hole (18) that is for introducing inert gas into a cavity portion (13) formed inside the turbine rotor and that penetrates a bottom portion of the groove portion at its center position (C) is covered by welding, wherein the gas-introducing hole (18) is covered by melting the surrounding area of the gas-introducing hole (18) close to the border (17) at the time of the welding at the border between the first member (14) and the second member (15),
the material of the first member is different with that of the second member in terms of hardness, and the second member that is lower in hardness than the first member is formed to have a length (L1) of the second recessed portion in the axial direction that is longer than a length (L2) of the first recessed portion of the first member in the axial direction, and
wherein the gas-introducing hole is formed at a position away from the border between the first and second members by penetrating the second member.

2. The turbine rotor according to Claim 1, wherein
the first member has a step portion (22) formed at the one end portion thereof and the second member has a step portion (23) formed at the one end portion thereof, the step portion of the first member and the step portion of the second member being fitted into each other.

3. The turbine rotor according to Claim 1, wherein
the first member has a convex portion (24) formed at the one end portion thereof and the second member has a concave portion (25) formed at the one end portion thereof, the concave portion having a shape fitted into the convex portion.

4. A method of producing a turbine rotor (10) as claimed in claim 1, the method comprising the steps of:
connecting the second member (15) to the first member (14),
forming the gas-introducing hole (18) by penetrating the bottom portion of the groove portion (16) at its center position (C), and
welding the first and second members in the groove portion.

## Patentansprüche

1. Turbinenrotor (10), der Folgendes umfasst:
ein erstes Element (14), das eine zylindrische Form aufweist und sich in eine axiale Richtung des Turbinenrotors erstreckt, und
ein zweites Element (15), das eine zylindrische Form aufweist und sich in die axiale Richtung des Turbinenrotors erstreckt, wobei das zweite Element axial mit dem ersten Element in einem Zustand verbunden ist, in dem ein zylindrischer Endabschnitt des ersten Elements und ein zylindrischer Endabschnitt des zweiten Elements an einer Grenze (17) in Berührung sind,
wobei ein Nutenabschnitt (16) zum Schweißen an der Grenze (17) zwischen dem ersten und dem zweiten Element durch Kombinieren eines ersten vertieften Abschnitts (141), der durch Schneiden einer Kante eines Kantenabschnitts des ersten Elements in die radiale Richtung gebildet ist, und eines zweiten vertieften Abschnitts (151), der durch Schneiden einer Kante eines Kantenabschnitts des zweiten Elements in die radiale Richtung gebildet ist, gebildet ist,
wobei ein Schweißabschnitt (12) gebildet ist, der das erste Element und das zweite Element verbindet, wobei der Schweißabschnitt durch Ausführen von Schweißen an der Grenze zwischen dem ersten Element (14) und dem zweiten Element (15) gebildet ist,
**dadurch gekennzeichnet, dass** eine Gaseinleitungsbohrung (18), die zum Einleiten von Inertgas in einen Hohlraumabschnitt (13), der innerhalb des Turbinenrotors gebildet ist, bestimmt ist und die in einen Bodenabschnitt des Nutenabschnitts an seiner Mittenposition (C) eindringt, durch Schweißen abgedeckt ist, wobei die Gaseinleitungsbohrung (18) abgedeckt ist, indem die umgebende Fläche der Gaseinleitungsbohrung (18) nahe der Grenze (17) zum Zeitpunkt des Schweißens an der Grenze zwischen dem ersten Element (14) und dem zweiten Element (15) geschmolzen wird,
wobei das Material des ersten Elements von dem des zweiten Elements hinsichtlich der Härte unterschiedlich ist, und das zweite Element, das über eine geringere Härte verfügt als das erste Element, gebildet ist, um eine Länge (L1) des zweiten vertieften Abschnitts in der axialen Richtung aufzuweisen, die länger ist als eine Länge (L2) des ersten vertieften Abschnitts des ersten Elements in der axialen Richtung, und
wobei die Gaseinleitungsbohrung an einer Position, die von der Grenze zwischen dem ersten und zweiten Element entfernt ist, durch Eindringen in das zweite Element gebildet ist.

2. Turbinenrotor nach Anspruch 1, wobei
das erste Element einen Stufenabschnitt (22) aufweist, der an dem einen Endabschnitt davon gebildet ist, und das zweite Element einen Stufenabschnitt (23) aufweist, der an dem einen Endabschnitt davon gebildet ist, wobei der Stufenabschnitt des ersten Elements und der Stufenabschnitt des zweiten Elements ineinander passen.

3. Turbinenrotor nach Anspruch 1, wobei
das erste Element einen konvexen Abschnitt (24) aufweist, der an dem einen Endabschnitt davon gebildet ist, und das zweite Element einen konkaven Abschnitt (25) aufweist, der an dem einen Endabschnitt davon gebildet ist, wobei der konkave Abschnitt eine Form aufweist, die in den konvexen Abschnitt passt.

4. Verfahren zum Herstellen eines Turbinenrotors (10) nach Anspruch 1, wobei das Verfahren die folgenden Schritte umfasst:
Verbinden des zweiten Elements (15) mit dem ersten Element (14),
Bilden der Gaseinleitungsbohrung (18) durch Eindringen in den Bodenabschnitt des Nutenabschnitts (16) an seiner Mittenposition (C), und
Schweißen des ersten und zweiten Elements in dem Nutenabschnitt.

## Revendications

1. Rotor de turbine (10) comprenant :
un premier élément (14) qui présente une forme cylindrique et s'étend dans une direction axiale du rotor de turbine, et
un second élément (15) qui présente une forme cylindrique et s'étend dans la direction axiale du rotor de turbine, le second élément étant axialement raccordé au premier élément dans un état dans lequel une portion d'extrémité cylindrique du premier élément et une portion d'extrémité cylindrique du second élément sont en contact au niveau d'une limite (17),
dans lequel une portion de rainure (16) pour le soudage est formée au niveau de la limite (17) entre les premier et second éléments par combinaison d'une première portion évidée (141) formée par la coupe d'une arête d'une portion d'arête du premier élément dans la direction radiale et d'une seconde portion évidée (151) formée par la coupe d'une arête d'une portion d'arête du second élément dans la direction radiale,
dans lequel une portion de soudage (12) est formée, laquelle raccorde le premier élément et le second élément, la portion de soudage étant formée par la réalisation du soudage au niveau de la limite entre le premier élément (14) et le second élément (15),
**caractérisé en ce qu'**un trou d'introduction de gaz (18) qui est destiné à l'introduction de gaz inerte dans une portion de cavité (13) formée à l'intérieur du rotor de turbine et qui pénètre dans une portion inférieure de la portion de rainure au niveau de sa position centrale (C) est couvert par soudage, dans lequel le trou d'introduction de gaz (18) est couvert par fusion de la zone environnante du trou d'introduction de gaz (18) près de la limite (17) au moment du soudage au niveau de la limite entre le premier élément (14) et le second élément (15),
le matériau du premier élément est différent de celui du second élément en termes de dureté, et le second élément qui est inférieur en dureté au premier élément est formé pour présenter une longueur (L1) de la seconde portion évidée dans la direction axiale qui est plus longue qu'une longueur (L2) de la première portion évidée du premier élément dans la direction axiale, et
dans lequel le trou d'introduction de gaz est formé dans une position loin de la limite entre les premier et second éléments par pénétration du second élément.

2. Rotor de turbine selon la revendication 1, dans lequel
le premier élément présente une portion étagée (22) formée au niveau de l'une portion d'extrémité de celui-ci et le second élément présente une portion étagée (23) formée au niveau de l'une portion d'extrémité, la portion étagée du premier élément et la portion étagée du second élément étant insérées l'une dans l'autre.

3. Rotor de turbine selon la revendication 1, dans lequel
le premier élément présente une portion convexe (24) formée au niveau de l'une portion d'extrémité de celui-ci et le second élément présente une portion concave (25) formée au niveau de l'une portion d'extrémité de celui-ci, la portion concave présentant une forme insérée dans la portion convexe.

4. Procédé de production d'un rotor de turbine (10) selon la revendication 1, le procédé comprenant les étapes de :
raccordement du second élément (15) au premier élément (14),
formation du trou d'introduction de gaz (18) par pénétration de la portion inférieure de la portion de rainure (16) au niveau de sa position centrale (C), et
soudage des premier et second éléments dans la portion de rainure.
